## Europäisches Patentamt

## European Patent Office

## Office européen des brevets

(19)

(11) Veröffentlichungsnummer: **0 064 742**
**A2**

(12) # EUROPÄISCHE PATENTANMELDUNG

(21) Anmeldenummer: **82103993.0**

(22) Anmeldetag: **07.05.82**

(51) Int. Cl.³: **F 03 D 1/06**

---

(30) Priorität: **07.05.81 DE 3117995**

(43) Veröffentlichungstag der Anmeldung:
**17.11.82 Patentblatt 82/46**

(84) Benannte Vertragsstaaten:
**FR GB SE**

(71) Anmelder: **Ficht GmbH**
**Spannleitenberg 1**
**D-8011 Kirchseeon(DE)**

(72) Erfinder: **Ficht, Reinhold**
**Spannleitenberg 1**
**D-8011 Kirchseeon(DE)**

(74) Vertreter: **Puschmann, Heinz H. et al,**
**Sendlinger-Tor-Platz 11**
**D-8000 München 2(DE)**

---

(54) **Rotor für eine Windkraftanlage.**

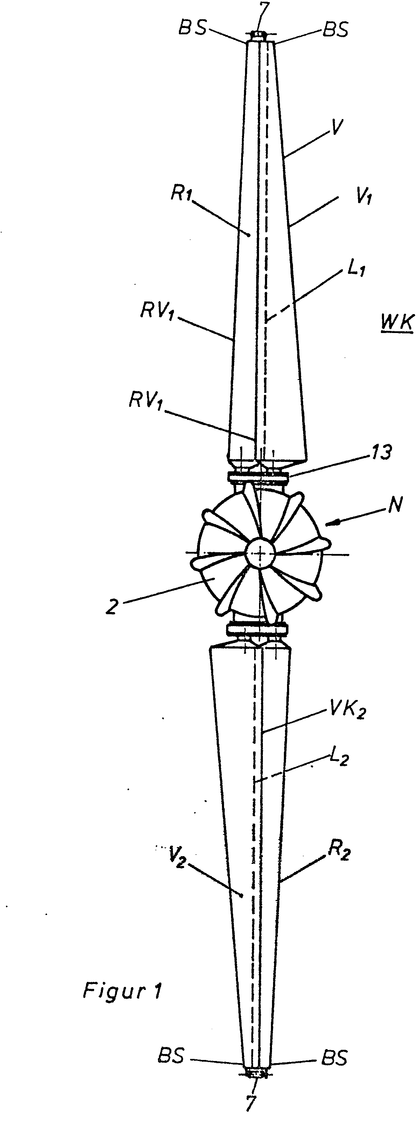

(57) Rotor für eine Windkraftanlage, bei dem jedem Rotorblatt ein Vorflügel zugeordnet ist, wobei Rotorblatt und
Vorflügel jeweils synchron um ihre Längsachsen verstellbar
in der Rotornabe gelagert sind; vgl. Figur 1.

./...

Croydon Printing Company Ltd.

EP 0 064 742 A2

Figur 1

HEINZ H. PUSCHMANN · PATENTANWALT
THOMAS-WIMMER-RING 14 · D 8000 MÜNCHEN 22
TELEFON (089) 22 78 87 · TELEX 52 48 78 rrm

**0064742**

- 1 -

Ficht GmbH
Spannleitenberg 1
8011 Kirchseeon

München, 04.05.1981
P 831/81
Pu/rei

## Rotor für eine Windkraftanlage

Die Erfindung bezieht sich auf einen Rotor für eine Windkraftanlage mit in einer in die Windrichtung drehbaren Nabe gelagerten Rotorblättern.

Infolge sich ständig ändernder Windverhältnisse und der Lärmentwicklung angeströmter, sich drehender, aerodynamischer Flächen bereitet die Ausbildung eines Rotors für Windkraftanlagen besondere Schwierigkeiten. Weitere Probleme sind der Zwang, eine möglichst große Leistungsausbeute aus dem gerade vorhandenen Wind und unabhängig von der jeweiligen Windgeschwindigkeit möglichst gleichbleibende Rotordrehzahlen zu erzielen.

Um die Luftkräfte für jedes Blatt eines Rotors einer Windkraftanlage konstant und unabhängig von der Windstärke und -richtung zu halten, ist es aus der DE-OS 27 15 584 bekannt, die Rotorblätter unabhängig voneinander elastisch oder gelenkig mit der Rotornabe zu verbinden und eine sehr hohe Übersetzung der gelenkigen Verbindungsmittel vorzusehen, um bereits durch kleine Schlagbewegungen der Rotorblätter eine große Anstellwinkeländerung durchführen zu können.

Eine solche Ausbildung ist aber sehr aufwendig und störanfällig und bedarf daher der ständigen Wartung. Solche Anordnungen konnten sich daher in der Praxis nicht durchsetzen.

Der Erfindung liegt die Aufgabe zugrunde, einen neuen Rotor für eine Windkraftanlage zu schaffen, der einfach in seinem Aufbau ist, zuverlässig über lange Betriebszeiten arbeitet und dessen Anordnung so getroffen ist, daß bei verbesserter Leistungsausbeute gegenüber den bisher bekannten Anordnungen eine Reduzierung der Lärmentwicklung erzielt wird.

Diese Aufgabe ist gemäß der Erfindung dadurch gelöst, daß jedem Rotorblatt ein Vorflügel derart zugeordnet ist, daß jeweils die Vorderkante des vorderen Rotorblattes seitlich versetzt vor der Vorderkante des dahinterliegenden Rotorblattes liegt, und daß jeweils die Blattspitzen eines jeden Rotorblattes mit der Blattspitze des jeweils zugehörigen Vorflügels über einen ein aerodynamisches Profil aufweisenden Grenzschichtzaun gelenkig verbunden sind.

Weitere Merkmale der Erfindung ergeben sich aus den Unteransprüchen.

Die erfindungsgemäße Ausbildung des Rotors weist erhebliche Vorteile auf. Durch das dem eigentlichen Rotorblatt vorgelagerte, als Vorflügel wirkende weitere Rotorblatt werden sowohl bessere Leistungswerte, verglichen mit üblichen Windrotoren, insbesondere große Drehmomente bei geringer Windgeschwindigkeit, erzielt, als auch die Lärmentwicklung erheblich reduziert. Hierzu trägt die als Grenzschichtzaun wirkende Verbindung zwischen den Blattspitzen von Rotorblatt und Vorflügel wesentlich bei. Aufgrund dieser Anordnung kann nunmehr auch auf eine aufwendige gelenkige Verbindung zwischen den einzelnen Rotorblättern und der Nabe verzichtet werden. Die Rotorblätter brauchen nur noch um ihre Rotorblatt-Längsachse verdrehbar in der Nabe gelagert*werden, um in Abhängigkeit der jeweiligen Windgeschwindigkeit gleiche Luftkräfte an den Rotorblät-

*zu

tern zu erzeugen. Es können daher auf einfache und betriebssichere Weise die Anstellwinkel der Rotorblätter über einen weiten Bereich derart eingestellt werden, daß unabhängig von der jeweils herrschenden Windgeschwindigkeit gleiche Rotordrehzahlen erzielbar sind. Der erfindungsgemäße Rotor eigent sich daher insbesondere für sogenannte Kleinwindkraftanlagen, die dem Energiebedarf einzelner Haushalte, Gehöfte und ähnlicher Einrichtungen angepaßt ist und für ein Windangebot mit einer mittleren Geschwindigkeit von ca. 3 m/sec sowie für eine Leistung im Bereich von ca. 8 kWh besonders geeignet ist.

Die Erfindung ist nachfolgend anhand eines in der Zeichnung schematisch dargestellten Ausführungsbeispieles beschrieben.

Es zeigen:

Figur 1     eine Vorderansicht des erfindungsgemäßen Rotors,

Figur 2     eine Seitenansicht der gemäß Figur 1 oberen Rotorblätter,

Figuren
2a - 2c    Profilschnitte der Rotorblätter und

Figur 3     eine vergrößerte Darstellung der Blattspitzen
            der Rotorblätter gemäß Figur 2.

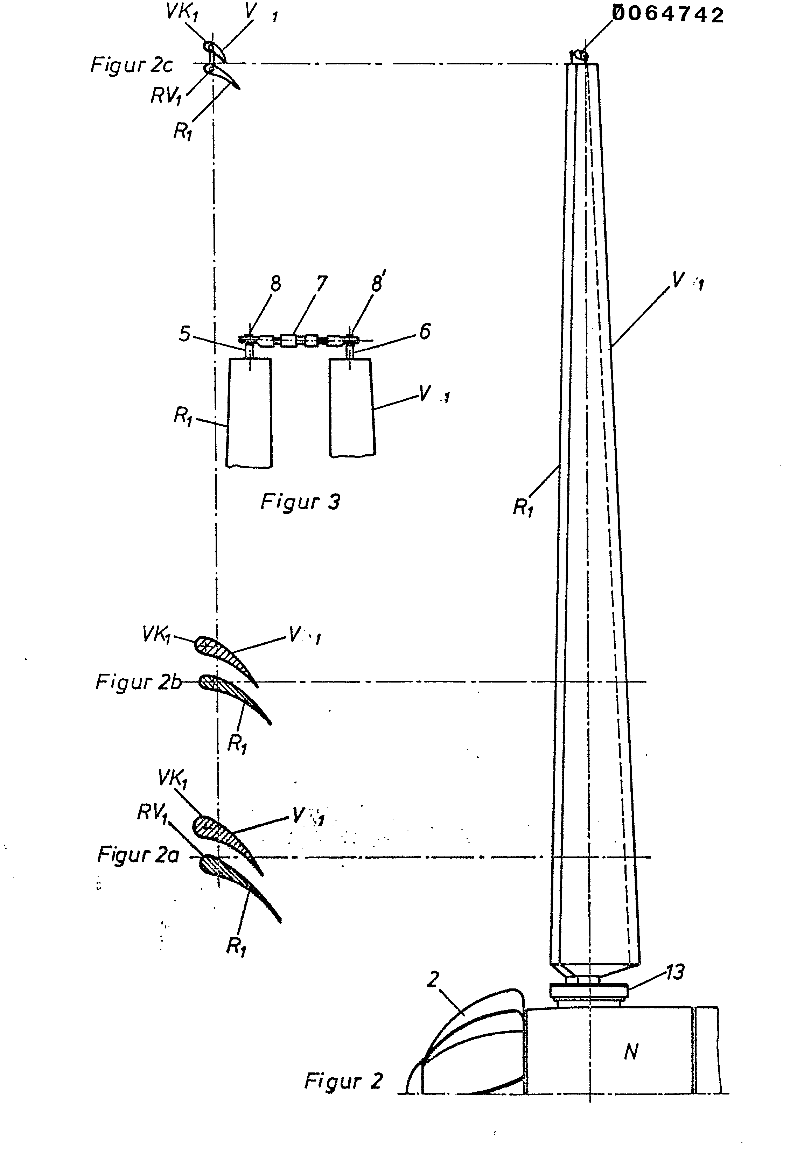

Eine hier nicht näher dargestellte Windkraftanlage WK (vgl. Figur 1) weist eine in die Windrichtung verstellbare Nabe N auf, in der in nicht näher dargestellter Weise einander gegenüberliegende Rotorblätter $R_1$ und $R_2$ um ihre Längsachse $L_1$ und $L_2$ mittels Lager 13 verdrehbar gelagert sind. Jedem Rotorblatt $R_1$ und $R_2$ ist ein als sogenannter Vorflügel wirkendes, ebenfalls in der Nabe N im Lager 13 verdrehbar gelagertes Rotorblatt $V_1$ und $V_2$ zugeordnet. Wie insbesondere aus den Figuren 2a bis 2c ersichtlich, weisen sowohl das Rotorblatt als auch sein Vorflügel jeweils ein aerodynamisches Profil auf und sind jeweils derart in der Nabe N gelagert, daß jeweils die Vorderkante $VK_1$ des vorderen Rotorblattes $V_1$ seitlich versetzt

vor der Vorderkante $V_1$ des dahinterliegenden Rotorblattes $R_1$ liegt. Aus den Figuren 2 und 2a bis 2c ist ferner ersichtlich, daß das als Vorflügel wirkende Rotorblatt $V_1$ eine geringere Blattiefe als das Rotorblatt $R_1$ aufweist, und daß beide Rotorblätter in gleicher Weise, also das Rotorblatt $R_1$ und das als Vorflügel wirkende Rotorblatt $V_1$ von der jeweiligen Blattwurzel zur jeweiligen Blattspitze BS hin sich verjüngend ausgebildet sind.

An den Blattspitzen BS der Rotorblätter $R_1$ und $V_1$ sind jeweils Lagerbolzen 5 und 6 (vgl. Figur 3) befestigt zur gelenkigen Aufnahme eines ein aerodynamisches Profil aufweisenden Grenzschichtzaunes 7. Die gelenkige Verbindung kann beispielsweise jeweils ein nicht näher dargestelltes Universalgelenk 8, 8' sein. Durch diesen Grenzschichtzaun wird der etwa der Blattdicke entsprechende Abstand zwischen dem jeweiligen Rotorblatt R und dem jeweils zugehörigen Vorflügel V von den Blattwurzeln bis zu den Blattspitzen hin annähernd konstant gehalten.

Obwohl im beschriebenen Ausführungsbeispiel lediglich zwei einander gegenüberliegende Rotorblattpaare $R_1/V_1$ und $R_2/V_2$ beschrieben und dargestellt sind, können grundsätzlich auch vier und mehr Rotorblattpaare vorgesehen werden. Der Vollständigkeit halber sei noch erwähnt, daß die hier nicht beschriebene Änderung der Anstellwinkel der Rotorblätter R und V unter Vermittlung eines nicht dargestellten Regelgetriebes erfolgt, das seine Stellenergie von einem koaxial zur Drehachse der Nabe N gelagerten Hilfsrotor 2 erhält. Ebenso sind die Lager 13, über die die Rotorblätter mit der Nabe N verbunden sind, in an sich bekannter Weise ausgeführt und daher nicht näher dargestellt und beschrieben.

- 1 -

Ficht GmbH                              München, 04.05.1981
Spannleitenberg 1                       P 831/81
8011 Kirchseeon

PATENTANSPRÜCHE

1.  Rotor für eine Windkraftanlage, bestehend aus in einer in die Windrichtung drehbaren Nabe gelagerten Rotorblättern, dadurch g e k e n n z e i c h n e t , daß jedem Rotorblatt (R) ein Vorflügel (V) derart zugeordnet ist, daß jeweils die Vorderkante (VK) des vorderen Rotorblattes seitlich versetzt vor der Vorderkante (RV) des dahinterliegenden Rotorblattes liegt, und daß jeweils die Blattspitze (BS) eines jeden Rotorblattes (R) mit der Blattspitze (BS) des jeweils zugehörigen Vorflügels (V) über einen ein aerodynamisches Profil aufweisenden Grenzschichtzaun (7) gelenkig verbunden sind.

2.  Rotor nach Anspruch 1, dadurch g e k e n n z e i c h - n e t , daß Rotorblatt (R) und Vorflügel (V) um ihre Längsachsen (L) synchron verstellbar in der Nabe (N) gelagert sind.

3.  Rotor nach den Ansprüchen 1 und 2, dadurch g e k e n n - z e i c h n e t , daß der Vorflügel (V) eine geringere Blattiefe als das zugehörige Rotorblatt (R) aufweist.

4.  Rotor nach den Ansprüchen 1 bis 3, dadurch g e k e n n - z e i c h n e t , daß jedes Rotorblatt (R) und jeder Vorflügel (V) von der Blattwurzel aus zur Blattspitze (BS) hin sich verjüngend ausgebildet ist.

5. Rotor nach den Ansprüchen 1 bis 4, dadurch g e k e n n -
z e i c h n e t , daß die Grenzschichtzäune (7) mittels
Universalgelenken (8) an den Blattspitzen (BS) angelenkt
sind.

Figur 1

0064742

Figur 2c

$VK_1$  $V_1$

$RV_1$

$R_1$

8  7  8'

5  6

$R_1$  $V_1$

Figur 3

$V_1$

$R_1$

$VK_1$  $V_1$

Figur 2b

$R_1$

$VK_1$

$RV_1$  $V_1$

Figur 2a

$R_1$

2

13

N

Figur 2